# EUROPÄISCHE PATENTSCHRIFT

(11) **EP 1 368 401 B1**
(45) Veröffentlichungstag und Bekanntmachung des Hinweises auf die Patenterteilung: **22.12.2004**
(21) Anmeldenummer: 02712893.3
(22) Anmeldetag: 06.02.2002
(51) Int. Cl.: C08G 59/18, C08G 59/40, C08G 59/72, C09D 163/00, C08L 63/00, H01B 3/40, H01L 23/29, C09J 163/00

(54) **WÄSSRIGE EPOXIDHARZEMULSION, VERFAHREN ZU IHRER HERSTELLUNG UND IHRE VERWENDUNG**
LIQUID EPOXY RESIN EMULSIONS, METHOD FOR THE PRODUCTION AND USE THEREOF
NOUVELLES EMULSIONS AQUEUSES DE RESINE EPOXY, LEUR PROCEDE DE PRODUCTION ET LEUR UTILISATION

(30) Priorität: 21.02.2001 DE 10108129
(43) Veröffentlichungstag der Anmeldung: 10.12.2003
(73) Patentinhaber: Altana Electrical Insulation Gmbh, 46483 Wesel (DE)
(72) Erfinder: LIENERT, Klaus-Wilhelm, 22763 Hamburg (DE); SCHMIDT, Gerold, 22145 Hamburg (DE); TÖDTER-KÖNIG, Sascha, 22763 Hamburg (DE)
(74) Vertreter: Fitzner, Uwe, Dr.
(86) Internationale Anmeldenummer: PCT/EP2002/001195
(87) Internationale Veröffentlichungsnummer: WO 2002/066534

(56) Entgegenhaltungen:
- DE-A- 4 232 220
- DE-A- 19 613 547
- JP-A- 6 184 261
- US-A- 5 523 336

## Beschreibung

Die vorliegende Erfindung betrifft neue wäßrige Epoxidharzemulsionen, die sich insbesondere zum Tränken von elektrischen Wickelgütern eignen. Außerdem betrifft die vorliegende Erfindung neue Katalysatoren für die Härtung von wäßrigen Epoxidharzemulsionen.

Elektrotechnische Bauteile wie elektrische Wickelgüter, z.B. Spulen in Motoren und Transformatoren, werden üblicherweise fixiert. Dies geschieht durch das Tränken mit einem geeigneten Lack, gefolgt von der Aushärtung. Die auf diese Weise mit einem Tränklack imprägnierten Spulen sind mechanisch beständiger und leiten die Wärme besser als nicht imprägnierte.

Stand der Technik ist die Imprägnierung mit ungesättigten Polyesterharzen. Für bestimmte Anwendungszwecke (Reparaturen) haben sich allerdings die Tränklacke bewährt. Tränklacke werden seit fast einem Jahrhundert verwendet Üblicherweise sind es Lösungen von Harzen (Alkyd-, Polyester-, Polyesterimidharze) und Härtern (Melamin-, Phenolharze, blockierte Isocyanate) in organischen Lösemitteln (vgl. W. Tillar Shugg, Handbook of Electrical and Electronic Insulating Materials, IEEE Press 1995). Diese Lacke sind niedrigviskos, um gut in die Wicklungen einzudringen, und enthalten neben Bindemitteln, Katalysatoren und Additiven große Mengen an organischen Lösemitteln. Diese werden beim Härtungsvorgang frei und müssen entsorgt werden.

Neben diesen klassischen Tränklacken haben sich wäßrige Lacke am Markt etabliert. Diese Lacke enthalten üblicherweise einen Co-Löser für das Bindemittel, dessen Restsäure mit einem Amin neutralisiert ist. So wird z.B. in der US 4,375,528 A ein Tränklack beschrieben bei dem der Co-Löser Butylglycol ist und als Neutralisationsmittel Dimethylethanolamin zum Einsatz kommt. Sowohl Co-Löser als auch Amin werden bei der Härtung freigesetzt.

Die vorliegende Erfindung hat sich zur Aufgabe gestellt, einen lösemittelfreien oder im wesentlichen lösemittelfreien, niedrigviskosen Tränklack auf Wasserbasis zur Verfügung zu stellen, der sich auf den im Elektromaschinenbau üblichen Anlagen verarbeiten lässt, Imprägnierungen und Beschichtungen von hoher Verbackungsfestigkeit liefert und keine Korrosion der elektrischen Wickelgüter hervorruft.

Demgemäß wurden die neuen wäßrigen Epoxidharzemulsionen gefunden, die
(A) mindestens ein Bindemittel, ausgewählt aus der Gruppe, bestehend aus Epoxidharzen und modifizierten Epoxidharzen,
(B) mindestens einen nichtionischen Verdicker und
(C) mindestens einen Katalysator für die Härtung, herstellbar, indem man mindestens einen Bortrifluorid-Komplex mit mindestens einer mindestens eine Epoxidgruppe enthaltenden Verbindung umsetzt,
in Wasser gelöst und/oder dispergiert enthalten.

Außerdem wurde ein neues Verfahren zu Herstellung wäßriger Epoxidharzemulsionen gefunden, bei dem man
(I) mindestens ein Bindemittel (A), mindestens einen nichtionischen Verdicker (B) und mindestens ein Additiv (E) in Wasser dispergiert und
(II) die resultierende Dispersion (I) mit mindestens einem Katalysator (C) versetzt.

Desweiteren wurde die neuartige Verwendung des Umsetzungsprodukts mindestens eines Bortrifluorid-Komplexes mit mindestens einer mindestens eine Epoxidgruppe enthaltenden Verbindung als Katalysator (C) für die Härtung wäßriger Epoxidharzemulsionen gefunden.

Nicht zuletzt wurden die neuartige Verwendung von Verbindungen (D) mit mindestens einem Stickstoffatom im Molekül als Cokatalysatoren der Katalysatoren (C) gefunden.

Die erfindungsgemäßen wäßrigen Epoxidharzemulsionen sind lösemittelfrei oder im wesentlichen lösemittelfrei. Dies bedeutet, daß ihr Gehalt an organischen Lösemitteln, bezogen auf die wäßrigen Epoxidharzemulsionen, unter 5 Gew.-%, vorzugsweise unter 3 Gew.-%, und bevorzugt unter 1 Gew.-% liegt.

Die erfindungsgemäßen wäßrigen Epoxidharzemulsionen enthalten mindestens ein Bindemittel (A), ausgewählt aus der Gruppe bestehend aus Epoxidharzen und modifizierten Epoxidharzen. Vorzugsweise sind die Epoxidharze (A) flüssig.

Epoxidharze und modifizierten Epoxidharze (A) sind als Gieß- und Tränkmittel bekannt und werden weltweit verwendet (vgl. beispielsweise Proceedings Electrical Insulation Conference and Electricat Manufacturing & Coil Winding Conference, in 1997 Seiten 239 - 248, in 1999 Seiten 371 - 387 und Seiten 453 - 468). Der Nachteil der üblicherweise eingesetzten niedrig und höher molekularen Bisphenol-A-Diglycidether ist die hohe Viskosität (üblich ab ca. 8000 mPas) und die damit verbundene aufwendige Verarbeitung (z.B. Vorwärmung der Objekte, Vakuumimprägnierung).

Erfindungsgemäß werden die Epoxidharze (A) deshalb in Wasser emulgiert. Dadurch erhält man eine niedrigviskose Formulierung. Diese Formulierung ist außerdem im vorstehend erläuterten Sinne colösemittelfrei. Standard-Epoxidharze sind ohne Zusätze nicht emulgierbar in Wasser. Auf dem Markt erhältliche wasseremulgierbare Epoxidharze (A) sind modifiziert und können neben Bisphenol-A auch Bisphenol-F-Epoxidharze (A) sowie üblicherweise einen C₁₂-C₁₄-Alkylglycidylether oder einen Glycidester einer Fettsäure enthalten. Beide Verbindungsklassen haben eine emulgierende Wirkung auf die Epoxidharze (A).

Die Epoxidharze (A) sind handelsübliche Verbindungen und werden beispielsweise unter der Marke Epikote ® 828 von der Firma Shell vertrieben.

Die erfindungsgemäße wäßrige Epoxidharzemulsionen enthalten außerdem mindestens einen, insbesondere einen, nichtionischen Verdicker (B). Vorzugsweise handelt es sich hierbei um einen nichtionischen Assoziativ-Verdicker, der als Strukturmerkmale ein hydrophiles Gerüst und hydrophobe Gruppen aufweist, die zu assoziativen Wechselwirkungen im wäßrigen Medium fähig sind. Bevorzugt werden nichtionische Assoziativ-Verdicker auf Polyurethanbasis verwendet. Darin sind als hydrophiles Gerüst Polyurethanketten mit Polyetherbausteinen enthalten. Beispiele geeigneter Assoziativ-Verdicker dieser Art werden in der deutschen Patentanmeldung DE 196 13 547 A 1, Spalte 4, Zeilen 9 bis 41, Römpp Lexikon Lacke und Druckfarben, Georg Thieme Verlag, Stuttgart, New York, 1998, Seiten 599 und 600, »Verdickungsmittel«, oder in dem Lehrbuch von Johan Bieleman, »Lackadditive«, Wiley-VCH, Weinheim, 1998, Seiten 51 bis 59, im Detail beschrieben. Die Assoziativ-Verdicker sind handelsübliche Verbindungen und werden beispielsweise unter der Marke Acrsysol ® RM8 von der Firma Rohm & Haas vertrieben.

Überraschenderweise werden mit Hilfe der erfindungsgemäß zu verwendenden Epoxidharze (A) und Assoziativ-Verdicker (B) außerordentlich lagerstabile Epoxidharzemulsionen erhalten.

Die erfindungsgemäßen wäßrigen Epoxidharzemulsionen enthalten darüber hinaus mindestens einen, insbesondere einen, Katalysator (C) für die Härtung.

Werden wäßrige Epoxidharzemulsionen mit einem handelsüblichen Bortrifluorid-Komplex, insbesondere einem üblichen und bekannten Bortrifluorid-Amin-Komplex (vgl. H. Lee und K. Neville in Handbook of Epoxy Resins, 1967, Kapitel 11-3) katalysiert, erhält man wäßrige Tränklacke. Allerdings ist dieser Bortrifluorid-Amin-Komplex, wie andere Aminkomplexe auch, nicht hydrolysestabil und hydrolysiert in einer wäßrigen Epoxidharzemulsion und bleibt nicht funktionsfähig. Die Verbackungsfestigkeit dieser Tränklacke, bestimmt nach IEC 61033 Methode A liegen daher unter denen, die man von Tränkharzen auf der Basis von Epoxidharzen erwartet

Der erfindungsgemäß zu verwendende Katalysator (C) ist ein Umsetzungsprodukt eines Bortrifluorid-Komplexes, insbesondere eines und Bortrifluorid-Amin-Komplexes mit mindestens einer mindestens eine, insbesondere eine, Epoxidgruppe enthaltenden Verbindung.

Beispiele geeigneter Amine sind primäre Alkylamine, insbesondere 2-Propanamin.

Beispiele geeigneter epoxidgruppenhaltiger Verbindungen sind Alkylglycidylether, insbesondere n-Butylglycidylether.

Die erfindungsgemäß zu verwendenden Katalysatoren (C) sind handelsübliche Verbindungen und werden beispielsweise unter der Marke Anchor ® 1115 von der Firma Air Products vertrieben.

Überraschenderweise wurde festgestellt, daß die erfindungsgemäß zu verwendenden Katalysatoren (C) in wäßrigen Epoxidharzemulsionen einsetzbar sind und zu lagerstabilen erfindungsgemäßen wäßrigen Epoxidharzemulsionen führen, die sich hervorragend als Tränklacke verwenden lassen. Diese liefern Imprägnierungen und Beschichtungen mit Verbackungsfestigkeiten von bis zu 220 N bei 155°C bestimmt nach IEC 61033 Methode A.

Vorzugsweise enthalten die erfindungsgemäßen wäßrigen Epoxidharzemulsionen bzw. die erfindungsgemäßen Tränklacke, bezogen auf die Epoxidharze (A), 4 - 15, bevorzugt 5 - 14 und insbesondere 7 - 13 Gew.-% der Katalysatoren (C).

Die erfindungsgemäßen wäßrigen Epoxidharzemulsionen bzw. die erfindungsgemäßen Tränklacke aus den vorstehend beschriebenen obligatorischen Bestandteilen (A), (B) und (C) liefern Beschichtungen und Imprägnierungen mit einer ausgezeichneten Verbackungsfestigkeit. Allerdings können sich unter Umständen auf dem Substraten (elektrische Wickelgüter, Blechpakete) vereinzelt leichte Korrosionsflecke bilden. Dieser Effekt wird erfindungsgemäß verhindert, wenn zur Formulierung Verbindungen (D) mit mindestens einem, insbesondere einem oder zwei, Stickstoffatom(en) im Molekül zugegeben werden. Vorzugsweise werden die Verbindungen (D) aus der Gruppe, bestehend aus tertiären Aminen und Heterocyclen ausgewählt.

Vorzugsweise enthalten die erfindungsgemäß zu verwendenden tertiären Amine (D) Reste, die aus der Gruppe, bestehend aus acyclischen und cydischen aliphatischen, aromatischen und heterocyclischen organischen Resten, insbesondere acyclischen aliphatischen organischen Resten, ausgewählt werden. Beispiele geeigneter tertiärer Amine (D) dieser Art sind Dimethylbenzylamin, Triethylamin, Tributylamin, Triethanolamin, Dimethylethanolamin, Dimethylcetylamin, Didecylmethylamin, Dimethyllaurylamin, Dimethyloctylamin und 4-Dimethylaminopyridin, insbesondere Dimethyloctylamin.

Vorzugsweise werden die Heterocyclen (D) aus der Gruppe, bestehend aus Imidazol und Imidazolen, die in 1- oder 2-Stellung oder in 1- und 2-Stellung mit acyclischen und cydischen aliphatischen, aromatischen und heterocyclischen organischen Resten substituiert sind, ausgewählt. Beispiele geeigneter substituierter Imidazole sind 1-Benzyl-2-methylimidazol, 2-Methylimidazol, 2-Butylimidazol. Besonders bevorzugt wird 2-Methylimidazol.

Überraschenderweise beeinflussen die vorstehend beschriebenen Verbindungen (D) nicht die Stabilität der erfindungsgemäßen wäßrigen Epoxidharzemulsionen in nachteiliger Weise, sondern verhindern als Cokatalysatoren wirksam die Korrosion der Substrate.

Die erfindungsgemäßen wäßrigen Epoxidharzemulsionen bzw. die erfindungsgemäßen Tränklacke enthalten, bezogen auf die Epoxidharze (A), vorzugsweise 0,1 - 6,0, bevorzugt 1 - 5 und insbesondere 1,7 - 4 Gew.-% der Verbindungen (D).

Die erfindungsgemäßen wäßrigen Epoxidharzemulsionen können außer den vorstehend beschriebenen Bestandteilen (A); (B), (C) und (D) noch mindestens ein übliches und bekanntes Additiv (E) enthalten. Beispiele geeigneter Additive (E) sind Entschäumungsmittel, Verlaufhilfsmittel, Benetzungsmittel und Korrosionsschutzmittel. Weitere Beispiele werden in dem Lehrbuch von Johan Bieleman, »Lackadditive«, Wiley-VCH, Weinheim, 1998, beschrieben. Die Additive (E) werden in den üblichen und bekannten Mengen angewandt.

Die erfindungsgemäßen wäßrigen Epoxidharzemulsionen werden durch Vermischen und Homogenisieren der vorstehend beschriebenen Bestandteile (A) bis (E) einem Scherfeld hergestellt. Es können die üblichen und bekannten Vorrichtungen wie Rührkessel, Dissolver, Ultraturrax oder Disperserscheiben verwendet werden. Dabei können die Bestandteile in beliebiger Reihenfolge miteinander vermischt werden. Erfindungsgemäß ist es jedoch von Vorteil, wenn man in einem ersten Verfahrenschritt (I) die vorstehend beschriebenen Bestandteile (A) und (B) sowie ggf. (E) in Wasser dispergiert oder emulgiert, wonach man die resultierende Dispersion (I) in einem zweiten Verfahrenschritt (II) mit den vorstehend beschriebenen Bestandteile (C) sowie ggf. (D) versetzt.

Die so erhaltenen erfindungsgemäßen wäßrigen Epoxidharzemulsionen eigenen sich hervorragend als Tränklacke, insbesondere zur Imprägnierung von elektrischen Wickelgütern. Die Aushärtung erfolgt objektabhängig z.B. bei einer Stunde bei 120°C plus 3 Stunden bei 150°C. Die so erhaltenen getränkten elektrischen Wickelgüter zeichnen sich durch eine gute Oberflächenbeschaffenheit, exzellente Verbackungsfestigkeit und hervorragende Lösemittelbeständigkeit aus.

Im folgenden wird die Erfindung unter Bezugnahme auf die Beispiele und die Vergleichsbeispiele näher beschrieben.

### Beispiele 1 bis 6 und Vergleichsbeispiel

### Beispiel 1 - Epoxidharzemulsion (A)

Aus 1000,0 g Epikote ® 828 (Epoxidharz Shell), 50,0 g Acrsysol ® RM8 (nicht-ionischer Assoziativverdicker, Rohm & Haas), 2,5 g Troykyd D777 (Entschäumer) wurde unter einem schnell laufenden Disperser durch stufenweise Zugabe von 1052,5 g Wasser eine Emulsion hergestellt. Sie hatte eine Viskosität von 800 mPas bei 23°C und einen Bindemittelgehalt von 49,1 % (1g/1h/130°C)

### Beispiel 2 - Tränklack 1

Zu 650,0 g der Emulsion (A) aus Beispiel 1 wurde ein Gemisch aus 30,0 g Anchor ® 1115 (Umsetzungsprodukt aus Bortrifluorid-2-Propanamin-Komplex mit Butylglycidylether der Firma Air Products), 30,0 g Wasser und 8,0 g Dimethyloctylamin hinzugegeben. Der Tränklack war über Wochen lagerstabil und hatte eine Viskosität von 650 mPas bei 23°C und einen Festkörper von 49,4 % (1,5g/2h/130°C).

Die Verbackungsfestigkeit des Lackes wurde nach IEC 61033 Methode A bestimmt Sie betrug bei 155°C 200 N. Mit dem Lack wurde ein rostfreies, entfettetes Stahlblech beschichtet Nach der Härtung erhielt man einen einwandfreien Film.

### Beispiel 3 - Tränklack 2

Zu 650,0 g der Emulsion (A) aus Beispiel 1 wurde ein Gemisch aus 22,5 g Anchor ® 1115, 28,5 g Wasser und 6,0 g Dimethyloctylamin hinzugegeben. Der Tränklack war über Wochen lagerstabil und hatte eine Viskosität von 1020 mPas bei 23°C und einen Festkörper von 50,6 % (1,5g/2h/130°C).

Die Verbackungsfestigkeit des Lackes wurde nach IEC 61033 Methode A bestimmt. Sie betrug bei 155°C 170 N und bei 180°C 130 N. Mit dem Lack wurde ein rostfreies, entfettetes Stahlblech beschichtet. Nach der Härtung erhielt man einen einwandfreien Film.

### Beispiel 4 - Tränklack 3

Zu 650,0 g der Emulsion (A) aus Beispiel 1 wurde ein Gemisch aus 39,0 g Anchor ® 1115, 49,4 g Wasser und 10,4 g Dimethyloctylamin hinzugegeben. Der Tränklack war lagerstabil und hatte eine Viskosität von 1550 mPas bei 23°C und einen Festkörper von 51,4 % (1,5g/2h/130°C).

Die Verbackungsfestigkeit des Lackes wurde nach IEC 61033 Methode A bestimmt. Sie betrug bei 155°C 220 N und bei 180°C 120 N. Mit dem Lack wurde ein rostfreies, entfettetes Stahlblech beschichtet Nach der Härtung erhielt man einen einwandfreien Film.

### Beispiel 5 - Tränklack 4

Zu 600,0 g der Emulsion (A) aus Beispiel 1 wurde ein Gemisch aus 18 g Anchor ® 1115, 18,0 g Wasser und 5,0 g 2-Methylimidazol hinzugegeben.

Der Tränklack war über Wochen lagerstabil und hatte eine Viskosität von 1980 mPas bei 23°C und einen Festkörper von 49,9 % (1,5g/2h/130°C).

Die Verbackungsfestigkeit des Lackes wurde nach IEC 61033 Methode A bestimmt. Sie betrug bei 155°C 90 N. Mit dem Lack wurde ein rostfreies, entfettetes Stahlblech beschichtet Nach der Härtung erhielt man einen einwandfreien Film.

### Beispiel 6 - Tränklack 5

Aus 250,0 g Epikote ® 828, 16,5 g Acrsysol ® RM8, 1,2 g Troykyd ® D777 wurde unter einem schnell laufenden Disperser durch stufenweise Zugabe von 292,7 g Wasser eine Emulsion hergestellt. Zu dieser Emulsion wurden 25,0 g Anchor ® 1115 in 25,0 g Wasser zugegeben.

Die Verbackungsfestigkeit des Lackes wurde nach IEC 61033 Methode A bestimmt. Sie betrug bei 155°C 170 N und bei 180°C 100 N. Mit dem Lack wurde ein rostfreies entfettetes Stahlblech beschichtet Nach der Härtung zeigten sich unter dem Film vereinzelte Anflüge von Korrosion.

### Vergleichsbeispiel

Aus 1000,0 g Epikote ® 255 (Epoxidharz Shell) wurde unter einem schnell laufenden Disperser durch stufenweise Zugabe von 1100,0 g Wasser eine Emulsion hergestellt Zu dieser wurden 100,0 g Anchor ® 1115 in 100,0 g Wasser zugegeben.

Die Verbackungsfestigkeit des Lackes wurde nach IEC 61033 Methode A bestimmt Sie betrug bei 155°C 80 N und bei 180°C 60 N.

## Patentansprüche

1. Wäßrige Epoxidharzemulsionen, enthaltend
(A) mindestens ein Bindemittel, ausgewählt aus der Gruppe, bestehend aus Epoxidharzen und modifizierten Epoxidharzen,
(B) mindestens einen nichtionischen Verdicker und
(C) mindestens einen Katalysator für die Härtung, herstellbar, indem man mindestens einen Bortrifluorid-Komplex mit mindestens einer mindestens eine Epoxidgruppe enthaltenden Verbindung umsetzt,
in Wasser gelöst und/oder dispergiert.

2. Wäßrige Epoxidharzemulsionen nach Anspruch 1, **dadurch gekennzeichnet, daß** die Epoxidharze und die modifizierten Epoxidharze (A) flüssig sind.

3. Wäßrige Epoxidharzemulsionen nach Anspruch 1 oder 2, **dadurch gekennzeichnet, daß** der Bortrifluorid-Komplex ein Bortrifluorid-Amin-Komplex ist.

4. Wäßrige Epoxidharzemulsionen nach Anspruch 3, **dadurch gekennzeichnet, daß** das Amin ein primäres Alkylamin ist

5. Wäßrige Epoxidharzemulsionen nach Anspruch 4, **dadurch gekennzeichnet, daß** das primäre Alkylamin 2-Propanamin ist

6. Wäßrige Epoxidharzemulsionen nach einem der Ansprüche 1 bis 5, **dadurch gekennzeichnet, daß** die epoxidgruppenhaltige Verbindung ein Alkylglycidylether ist

7. Wäßrige Epoxidharzemulsionen nach Anspruch 6, **dadurch gekennzeichnet, daß** der Alkylglycidylether n-Butylglycidylether ist

8. Wäßrige Epoxidharzemulsionen nach einem der Ansprüche 1 bis 7, **dadurch gekennzeichnet, daß** der nichtionischen Verdicker (B) ein Assoziativ-Verdicker ist, der als Strukturmerkmale einen hydrophiles Gerüst und hydrophobe Gruppen aufweist, die im wäßrigen Medium zu assoziativen Wechselwirkungen befähigt sind.

9. Wäßrige Epoxidharzemulsionen nach Anspruch 8, **dadurch gekennzeichnet, daß** der Assoziativ-Verdicker ein Assoziativ-Verdicker auf Polyurethanbasis ist.

10. Wäßrige Epoxidharzemulsionen nach einem der Ansprüche 1 bis 9, **dadurch gekennzeichnet, daß** sie mindestens eine Verbindung (D) mit mindestens einem Stickstoffatom im Molekül enthalten.

11. Wäßrige Epoxidharzemulsionen nach Anspruch 10, **dadurch gekennzeichnet, daß** die Verbindung (D) aus der Gruppe, bestehend aus tertiären Aminen und Heterocyclen, ausgewählt wird.

12. Wäßrige Epoxidharzemulsionen nach Anspruch 11, **dadurch gekennzeichnet, daß** die tertiären Amine (D) Reste enthalten, die aus der Gruppe, bestehend aus acyclischen und cyclischen, aromatischen und heterocyclischen organischen Resten, ausgewählt werden.

13. Wäßrige Epoxidharzemulsionen nach Anspruch 12, **dadurch gekennzeichnet, daß** die tertiären Amine (D) aus der Gruppe, bestehend aus Dimethylbenzylamin, Triethylamin, Tributylamin, Triethanolamin, Dimethylethanolamin, Dimethylcetylamin, Didecylmethylamin, Dimethyllaurylamin, Dimethyloctylamin und 4-Dimethylaminopyridin, ausgewählt werden.

14. Wäßrige Epoxidharzemulsionen nach Anspruch 13, **dadurch gekennzeichnet, daß** das tertiäre Amin (D) Dimethyloctylamin ist

15. Wäßrige Epoxidharzemulsionen nach Anspruch 11, **dadurch gekennzeichnet, daß** die Heterocyclen (D) aus der Gruppe, bestehend aus Imidazol und Imidazolen, die in 1- oder 2-Stellung oder in 1- und 2-Stellung mit acyclischen und cyclischen aliphatischen, aromatischen und heterocyclischen organischen Resten substituiert sind, ausgewählt werden.

16. Wäßrige Epoxidharzemulsionen nach Anspruch 15, **dadurch gekennzeichnet, daß** die substituierten Imidazole aus der Gruppe, bestehend aus 1-Benzyl-2-methylimidazol, 2-Methylimidazol und 2-Butylimidazol, ausgewählt werden.

17. Wäßrige Epoxidharzemulsionen nach Anspruch 16, **dadurch gekennzeichnet, daß** das substituierte Imidazol 2-Methylimidazol ist

18. Wäßrige Epoxidharzemulsionen nach einem der Ansprüche 1 bis 17, **dadurch gekennzeichnet, daß** sie Additive (E) enthalten.

19. Wäßrige Epoxidharzemulsionen nach Anspruch 18, **dadurch gekennzeichnet, daß** die Additive (E) aus der Gruppe, bestehend aus Entschäumungsmitteln, Verlaufshilfsmitteln, Benetzungsmitteln und Korrosionsschutzmitteln, ausgewählt werden.

20. Verfahren zur Herstellung wäßriger Epoxidharzemulsionen gemäß einem der Ansprüche 1 bis 19, **dadurch gekennzeichnet, daß** man
(I) mindestens ein Bindemittel (A), mindestens einen nichtionischen Verdicker (B) und mindestens ein Additiv (E) in Wasser dispergiert und
(II) die resultierende Dispersion (I) mit mindestens einem Katalysator (C) versetzt.

21. Verfahren nach Anspruch 20, **dadurch gekennzeichnet, daß** man die Dispersion (I) im Verfahrenschritt (II) noch mit mindestens einer Verbindung (D) mit mindestens einem Stickstoffatom im Molekül versetzt.

22. Verwendung der wäßrigen Epoxidharzemulsionen gemäß einem der Ansprüche 1 bis 19 als Tränklacke.

23. Verwendung nach Anspruch 22, **dadurch gekennzeichnet, daß** die Tränklacke zur Imprägnierung und/oder Beschichtung elektrotechnischer Bauteile verwendet werden.

24. Verwendung nach Anspruch 23, **dadurch gekennzeichnet, daß** die elektrotechnischen Bauteile elektrische Wickelgüter sind.

## Claims

1. Aqueous epoxy resin emulsion comprising
(A) at least one binder selected from the group consisting of epoxy resins and modified epoxy resins,
(B) at least one nonionic thickener and
(C) at least one catalyst for the curing, preparable by reacting at least one boron trifluoride complex with at least one compound containing at least one epoxide group,
dissolved and/or dispersed in water.

2. Aqueous epoxy resin emulsion according to Claim 1, **characterized in that** the epoxy resins and the modified epoxy resins (A) are liquid.

3. Aqueous epoxy resin emulsion according to Claim 1 or 2, **characterized in that** the boron trifluoride complex is a boron trifluoride-amine complex.

4. Aqueous epoxy resin emulsion according to Claim 3, **characterized in that** the amine is a primary alkylamine.

5. Aqueous epoxy resin emulsion according to Claim 4, **characterized in that** the primary alkylamine is 2-propanamine.

6. Aqueous epoxy resin emulsion according to one of Claims 1 to 5, **characterized in that** the epoxide group-containing compound is an alkyl glycidyl ether.

7. Aqueous epoxy resin emulsion according to Claim 6, **characterized in that** the alkyl glycidyl ether is n-butyl glycidyl ether.

8. Aqueous epoxy resin emulsion according to one of Claims 1 to 7, **characterized in that** the nonionic thickener (B) is an associative thickener whose structural features are a hydrophilic framework and hydrophobic groups which are capable of associative interactions in the aqueous medium.

9. Aqueous epoxy resin emulsion according to Claim 8, **characterized in that** the associative thickener is an associative thickener based on polyurethane.

10. Aqueous epoxy resin emulsion according to one of Claims 1 to 9, **characterized in that** it comprises at least one compound (D) having at least one nitrogen atom in the molecule.

11. Aqueous epoxy resin emulsion according to Claim 10, **characterized in that** the compound (D) is selected from the group consisting of tertiary amines and heterocycles.

12. Aqueous epoxy resin emulsion according to Claim 11, **characterized in that** the tertiary amines (D) contain radicals which are selected from the group consisting of acyclic and cyclic, aromatic and heterocyclic organic radicals.

13. Aqueous epoxy resin emulsion according to Claim 12, **characterized in that** the tertiary amines (D) are selected from the group consisting of dimethylbenzylamine, triethylamine, tributylamine, triethanolamine, dimethylethanolamine, dimethylcetylamine, didecylmethylamine, dimethyllaurylamine, dimethyloctylamine and 4-dimethylaminopyridine.

14. Aqueous epoxy resin emulsion according to Claim 13, **characterized in that** the tertiary amine (D) is dimethyloctylamine.

15. Aqueous epoxy resin emulsion according to Claim 11, **characterized in that** the heterocycles (D) are selected from the group consisting of imidazole and imidazoles which are substituted in the 1- or 2-position or the 1- and 2-positions by acyclic and cyclic aliphatic, aromatic and heterocyclic organic radicals.

16. Aqueous epoxy resin emulsion according to Claim 15, **characterized in that** the substituted imidazoles are selected from the group consisting of 1-benzyl-2-methylimidazole, 2-methylimidazole and 2-butylimidazole.

17. Aqueous epoxy resin emulsion according to Claim 16, **characterized in that** the substituted imidazole is 2-methylimidazole.

18. Aqueous epoxy resin emulsion according to one of Claims 1 to 17, **characterized in that** it comprises additives (E).

19. Aqueous epoxy resin emulsion according to Claim 18, **characterized in that** the additives (E) are selected from the group consisting of defoamers, leveling assistants, wetting agents and corrosion inhibitors.

20. Process for producing aqueous epoxy resin emulsions according to one of Claims 1 to 19, **characterized in that**
(I) at least one binder (A), at least one nonionic thickener (B) and at least one additive (E) are dispersed in water and
(II) the resultant dispersion (I) is admixed with at least one catalyst (C).

21. Process according to Claim 20, **characterized in that** the dispersion (I) in process step (II) is also admixed with at least one compound (D) having at least one nitrogen atom in the molecule.

22. Use of the aqueous epoxy resin emulsions according to one of Claims 1 to 19 as an impregnating varnish.

23. Use according to Claim 22, **characterized in that** the impregnating varnish is used for impregnating and/or coating electrical components.

24. Use according to Claim 23, **characterized in that** the electrical components are electrical windings.

## Revendications

1. Emulsions aqueuses de résines époxy, contenant
(A) au moins un liant choisi dans le groupe constitué par des résines époxy et des résines époxy modifiées,
(B) au moins un épaississant non ionique et
(C) au moins un catalyseur pour le durcissement, pouvant être préparé en faisant réagir au moins un complexe de trifluorure de bore avec au moins un composé contenant au moins un groupe époxy,
dissous et/ou dispersés dans de l'eau.

2. Emulsions aqueuses de résines époxy selon la revendication 1, **caractérisées en ce que** les résines époxy et les résines époxy modifiées (A) sont liquides.

3. Emulsions aqueuses de résines époxy selon la revendication 1 ou 2, **caractérisées en ce que** le complexe de trifluorure de bore est un complexe trifluorure de bore-amine.

4. Emulsions aqueuses de résines époxy selon la revendication 3, **caractérisées en ce que** l'amine est une alkylamine primaire.

5. Emulsions aqueuses de résines époxy selon la revendication 4, **caractérisées en ce que** l'alkylamine primaire est la 2-propanamine.

6. Emulsions aqueuses de résines époxy selon l'une quelconque des revendications 1 à 5, **caractérisées en ce que** le composé contenant des groupes époxy est un alkylglycidyléther.

7. Emulsions aqueuses de résines époxy selon la revendication 6, **caractérisées en ce que** l'alkylglycidyléther est le n-butylglycidyléther.

8. Emulsions aqueuses de résines époxy selon l'une quelconque des revendications 1 à 7, **caractérisées en ce que** l'épaississant non ionique (B) est un épaississant associatif qui présente en tant que caractéristiques structurales un squelette hydrophile et des groupes hydrophobes qui sont capables d'interactions associatives en milieu aqueux.

9. Emulsions aqueuses de résines époxy selon la revendication 8, **caractérisées en ce que** l'épaississant associatif est un épaississant associatif à base de polyuréthanne.

10. Emulsions aqueuses de résines époxy selon l'une quelconque des revendications 1 à 9, **caractérisées en ce qu'**elles contiennent au moins un composé (D) comportant au moins un atome d'azote dans la molécule.

11. Emulsions aqueuses de résines époxy selon la revendication 10, **caractérisées en ce que** le composé (D) est choisi dans le groupe constitué par des amines tertiaires et des hétérocycles.

12. Emulsions aqueuses de résines époxy selon la revendication 11, **caractérisées en ce que** les amines tertiaires (D) contiennent des radicaux qui sont choisis dans le groupe constitué par des radicaux organiques acycliques et cycliques, aromatiques et hétérocycliques.

13. Emulsions aqueuses de résines époxy selon la revendication 12, **caractérisées en ce que** les amines tertiaires (D) sont choisies dans le groupe constitué par la diméthylbenzylamine, la triéthylamine, la tributylamine, la triéthanolamine, la diméthyléthanolamine, la diméthylcétylamine, la didécylméthylamine, la diméthyllaurylamine, la diméthyloctylamine et la 4-diméthylaminopyridine.

14. Emulsions aqueuses de résines époxy selon la revendication 13, **caractérisées en ce que** l'amine tertiaire (D) est la diméthyloctylamine.

15. Emulsions aqueuses de résines époxy selon la revendication 11, **caractérisées en ce que** les hétérocycles (D) sont choisis dans le groupe constitué par l'imidazole et les imidazoles qui sont substitués en position 1 ou 2 ou en positions 1 et 2 par des radicaux organiques aliphatiques acycliques et cycliques, aromatiques et hétérocycliques.

16. Emulsions aqueuses de résines époxy selon la revendication 15, **caractérisées en ce que** les imidazoles substitués sont choisis dans le groupe constitué par le 1-benzyl-2-méthylimidazole, le 2-méthylimidazole et le 2-butylimidazole.

17. Emulsions aqueuses de résines époxy selon la revendication 16, **caractérisées en ce que** l'imidazole substitué est le 2-méthylimidazole.

18. Emulsions aqueuses de résines époxy selon l'une quelconque des revendications 1 à 17, **caractérisées en ce qu'**elles contiennent des additifs (E).

19. Emulsions aqueuses de résines époxy selon la revendication 18, **caractérisées en ce que** les additifs (E) sont choisis dans le groupe constitué par des antimousses, des adjuvants d'étalement, des agents mouillants et des agents anticorrosion.

20. Procédé pour la préparation d'émulsions aqueuses de résines époxy selon l'une quelconque des revendications 1 à 19, **caractérisé en ce qu'**on
(I) disperse dans de l'eau au moins un liant (A), au moins un épaississant non ionique (B) et au moins un additif (E) et
(II) ajoute à la dispersion (I) résultante au moins un catalyseur (C).

21. Procédé selon la revendication 20, **caractérisé en ce que** dans l'étape (II) du procédé on ajoute encore à la dispersion (I) au moins un composé (D) comportant au moins un atome d'azote dans la molécule.

22. Utilisation des émulsions aqueuses de résines époxy selon l'une quelconque des revendications 1 à 19, en tant que vernis d'imprégnation.

23. Utilisation selon la revendication 22, **caractérisée en ce que** les vernis d'imprégnation sont utilisés pour l'imprégnation et/ou le revêtement de composants électrotechniques.

24. Utilisation selon la revendication 23, **caractérisée en ce que** les composants électrotechniques sont des articles bobinés électriques.
